# FASCICULE DE BREVET EUROPEEN

(11) **EP 1 923 128 B1**
(45) Date de publication et mention de la délivrance du brevet: **23.06.2010**
(21) Numéro de dépôt: 07356146.6
(22) Date de dépôt: 22.10.2007
(51) Int. Cl.: B01F 7/00, A47J 43/07

(54) **Outil de travail rotatif pour appareil électroménager de préparation culinaire, notamment confiturier**
Sich drehendes Arbeitswerkzeug für Haushaltsgerät zur Essenszubereitung, insbesondere für einen Marmeladenkocher
Rotating work tool for a kitchen appliance, in particular a jam pot

(30) Priorité: 17.11.2006 FR 0610054
(43) Date de publication de la demande: 21.05.2008
(73) Titulaire: SEB S.A., 69130 Ecully (FR)
(72) Inventeur: Noguez, Jean Michel, 65100 Lourdes (FR); Astegno, Jean Paul, 64420 Espoey (FR); Charles, Patrick, 65290 Louey (FR)
(74) Mandataire: Kiehl, Hubert

(56) Documents cités:
- EP-A1- 0 799 593
- US-A- 2 193 686
- US-A1- 2003 213 373
- US-A1- 2006 062 079

## Description

La présente invention concerne le domaine technique des appareils électroménagers de préparation culinaire comportant un outil de travail rotatif agencé dans une cuve.

La présente invention concerne notamment les appareils électroménagers de préparation culinaire chauffants.

La réalisation de confitures à partir de fruits crus nécessite généralement un remuage du contenu de la cuve, pour favoriser la désagrégation des fruits et le mélange de la préparation.

D'autres types de préparations réalisées avec un appareil chauffant peuvent nécessiter un remuage, notamment des préparations à base de céréales ou de riz.

Un but de la présente invention est de proposer un outil de travail rotatif favorisant le mélange d'une préparation comportant des éléments solides disposés dans un milieu liquide.

Un autre but de la présente invention est de proposer un outil de travail rotatif favorisant la désagrégation d'éléments solides disposés dans un milieu liquide.

Un autre but de la présente invention est de proposer un appareil électroménager du type précité, comportant un outil de travail rotatif favorisant le mélange d'une préparation comportant des éléments solides disposés dans un milieu liquide.

Un autre but de la présente invention est de proposer un appareil électroménager du type précité, comportant un outil de travail rotatif favorisant la désagrégation d'éléments solides disposés dans un milieu liquide.

Le document US 2003/0213372 A1 montre un outil de travail rotatif représentant l'art antérieur.

Les buts de l'invention sont atteints avec un outil de travail rotatif pour appareil électroménager de préparation culinaire, comportant un organe d'entraînement présentant un axe de rotation, et un organe de travail, l'organe de travail comportant un montant latéral présentant une face intérieure concave ménageant un passage intérieur transversal, et une face extérieure, la face intérieure et la face extérieure s'étendant entre un bord latéral extérieur et un bord latéral intérieur, la distance du bord latéral extérieur à l'axe de rotation étant supérieure à la distance du bord latéral intérieur à l'axe de rotation, du fait que la face intérieure est concave entre le bord latéral extérieur et le bord latéral intérieur.

Ainsi dans un sens de rotation, les aliments sont repoussés par la face inférieure jusqu'au bord latéral intérieur à travers le passage transversal. La concavité de la face intérieure permet de favoriser le mélange. La variation de courbure conférée par la concavité permet d'obtenir un effet de tourbillon. Dans l'autre sens de rotation, les aliments sont repoussés par la face extérieure. Un effet de pressage peut être obtenu si le montant latéral de l'outil de travail rotatif tourne à proximité d'une paroi d'un récipient de travail.

Avantageusement alors, le bord latéral intérieur est retourné vers l'intérieur de l'outil de travail rotatif. Cette disposition permet d'améliorer encore l'efficacité du mélange.

Avantageusement encore, pour améliorer l'efficacité du mélange, la largeur du passage intérieur transversal au niveau du bord latéral intérieur est inférieure à 0,75 fois la largeur du passage intérieur transversal au niveau du bord latéral extérieur.

Avantageusement alors, le bord latéral intérieur présente une encoche. Cette encoche permet de faciliter le passage de préparations à base de céréales ou de riz. Si désiré, le bord latéral intérieur peut présenter plusieurs encoches.

Avantageusement encore, l'outil de travail rotatif comporte un bras inférieur. Cette disposition permet de remuer les aliments les plus denses qui ont tendance à se déposer au niveau du bras inférieur.

Avantageusement alors, le bras inférieur présente une section transversale ayant un profil supérieur bombé. Cette disposition permet d'obtenir un fonctionnement efficace pour les deux sens de rotation.

Selon une forme de réalisation préférée, le bras inférieur est prolongé par le montant latéral. Cette disposition permet de simplifier la construction de l'outil de travail rotatif.

Avantageusement encore, l'outil de travail rotatif comporte un autre bras inférieur. Avantageusement alors, l'organe d'entraînement est disposé entre le bras inférieur et l'autre bras inférieur. Cette disposition permet un meilleur équilibrage de l'outil de travail rotatif.

Avantageusement encore, l'outil de travail rotatif comporte un moyeu tubulaire présentant deux échancrures inférieures opposées. Ces dispositions permettent d'utiliser l'outil de travail rotatif dans une cuve comportant une cheminée prévue pour le passage des moyens d'entraînement de l'outil de travail rotatif, et de faciliter le rangement de l'outil de travail rotatif dans ladite cuve ou dans un autre élément comportant une cheminée.

Avantageusement encore, l'outil de travail rotatif comporte un autre organe de travail comportant un autre montant latéral présentant une face intérieure concave ménageant un passage intérieur transversal, et une face extérieure, la face intérieure et la face extérieure s'étendant entre un bord latéral extérieur et un bord latéral intérieur, la distance du bord latéral extérieur à l'axe de rotation étant supérieure à la distance du bord latéral intérieur à l'axe de rotation, la face intérieure étant concave entre le bord latéral extérieur et le bord latéral intérieur. Cette disposition permet d'améliorer l'efficacité du brassage.

Avantageusement alors, les bords latéraux extérieurs des montants latéraux supérieurs sont disposés sur un même côté de l'outil de travail rotatif et les bords latéraux intérieurs des montants latéraux supérieurs sont disposés sur un même autre côté de l'outil de travail rotatif. Cette disposition permet de combiner des actions centrifuge et centripète sur les aliments sans changer de sens de rotation pour l'outil de travail rotatif.

Avantageusement encore, l'organe de travail et l'autre organe de travail présentent une symétrie miroir, pour faciliter un fonctionnement réversible de l'outil de travail rotatif.

Avantageusement encore, l'autre bras inférieur est prolongé par l'autre montant latéral, pour obtenir un meilleur équilibrage de l'outil de travail rotatif.

Les buts de l'invention sont atteints également avec un appareil électroménager de préparation culinaire comprenant une cuve présentant un fond et une paroi latérale, un outil de travail rotatif étant agencé dans ladite cuve, du fait que l'outil de travail rotatif est conforme à l'une des caractéristiques précédentes, et que le bord latéral extérieur s'élève le long de la paroi latérale. Dans un des sens de rotation de l'outil de travail rotatif la face intérieure concave du montant latéral permet de ramener les aliments vers le centre de la cuve au travers du passage intérieur transversal, alors que dans l'autre sens de rotation de l'outil de travail rotatif la face extérieure du montant latéral permet de presser les aliments entre le montant latéral et la paroi latérale de la cuve.

Avantageusement alors, l'appareil électroménager de préparation culinaire comprend un récipient intermédiaire prévu pour reposer sur la cuve, le récipient intermédiaire comportant une protubérance prévue pour coiffer une cheminée issue du fond de la cuve, le moyeu de l'outil de travail rotatif étant tubulaire et présentant deux échancrures inférieures opposées agencées chacune entre le bras inférieur et l'autre bras inférieur, les échancrures inférieures coopérant avec la protubérance lorsque l'outil de travail rotatif est disposé dans le récipient intermédiaire. Cette disposition permet de faciliter le rangement de l'appareil.

Avantageusement alors, le récipient intermédiaire forme une passoire. Cette disposition permet de cuire à la vapeur et/ou de réaliser des jus de fruits en utilisant la passoire après avoir retiré l'outil de travail rotatif.

Avantageusement alors, le montant latéral supérieur de l'organe de travail ménage un passage avec la paroi latérale de la cuve. Cette disposition permet d'éviter les à-coups dus au coincement de morceaux d'aliments entre l'outil de travail rotatif et la paroi latérale de la cuve.

Avantageusement alors, l'outil de travail rotatif comporte un autre organe de travail du type précité, l'autre montant latéral ménageant un passage avec la paroi latérale de la cuve. Cette disposition permet d'éviter les à-coups dus au coincement de morceaux d'aliments entre l'outil de travail rotatif et la paroi latérale de la cuve, quel que soit le sens de rotation de l'outil de travail rotatif, lorsque le montant latéral et l'autre montant latéral présentent des orientations opposées.

Avantageusement encore, la cuve est associée à des moyens de chauffe. Cette disposition permet de faciliter la transformation des aliments.

L'invention sera mieux comprise à l'étude d'un exemple de réalisation et d'une variante, pris à titre nullement limitatif, illustrés dans les figures annexées, dans lesquelles :
- la figure 1 est une vue en éclaté d'un appareil électroménager de préparation culinaire comportant un outil de travail rotatif selon l'invention,
- la figure 2 est une vue en perspective plongeante de l'appareil électroménager de préparation culinaire illustré à la figure 1, dans lequel le couvercle et le récipient intermédiaire ont été retirés,
- la figure 3 est une vue en coupe verticale de l'appareil électroménager de préparation culinaire représenté à la figure 2,
- les figures 4 à 6 sont respectivement une vue latérale, une vue de dessus et une vue en perspective de l'outil de travail rotatif selon l'invention visible sur la figure 1,
- les figures 7 à 9 sont respectivement une vue latérale, une vue de dessus et une vue en perspective d'une variante de réalisation de l'outil de travail rotatif selon l'invention visible sur la figure 1,
- la figure 10 est une vue en perspective d'une autre variante de réalisation de l'outil de travail rotatif selon l'invention visible sur la figure 1,
- la figure 11 est une vue en perspective plongeante de l'appareil électroménager de préparation culinaire illustré à la figure 1, dans lequel le couvercle a été retiré et dans lequel l'outil de travail rotatif selon l'invention est disposé en position de rangement dans le récipient intermédiaire.

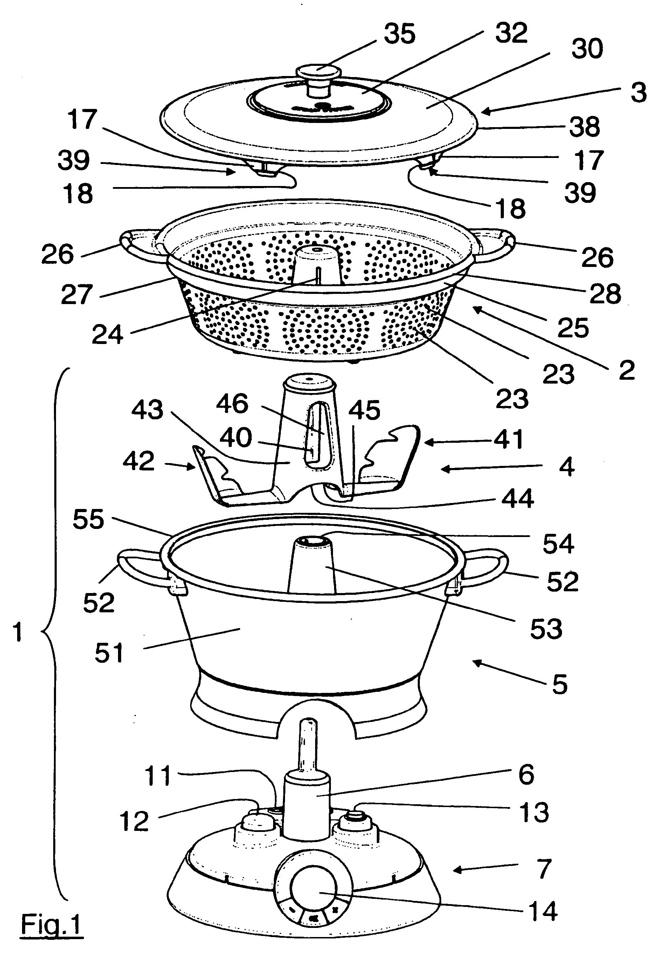

La figure 1 illustre un exemple de réalisation d'un appareil électroménager de préparation culinaire comportant une partie inférieure 1, un récipient intermédiaire 2, et un couvercle 3. La partie inférieure 1 comprend un outil de travail rotatif 4. La partie inférieure 1 comprend une cuve 5. L'outil de travail rotatif 4 est prévu pour être agencé dans la cuve 5. La partie inférieure 1 comprend un dispositif d'entraînement 6 de l'outil de travail rotatif 4. Le dispositif d'entraînement 6 est logé dans un socle 7. La cuve 5 repose sur le socle 7.

La cuve 5 présente un fond 50 et une paroi latérale 51. La paroi latérale 51 est avantageusement tronconique. La cuve 5 présente des organes de préhension 52 disposés sur la paroi latérale 51. La cuve 5 présente aussi une cheminée 53 s'élevant à partir du fond 50. La cheminée 53 est avantageusement tronconique. Un palier 54 est agencé en partie supérieure de la cheminée 53. Le palier 54 permet de faciliter la rotation de l'outil de travail rotatif 4. Le palier 54 est avantageusement clipsé à l'intérieur du sommet de la cheminée 53.

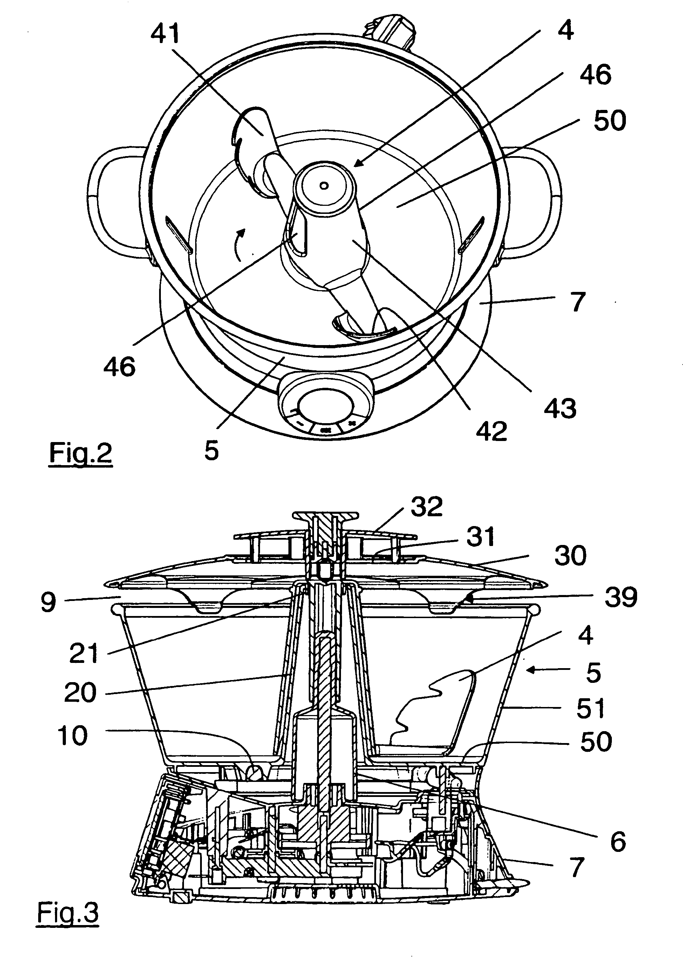

La cuve 5 est associée à des moyens de chauffe 10. Selon le mode de réalisation visible sur la figure 3, les moyens de chauffe 10 sont formés par un élément chauffant blindé disposé sous le fond 50 de la cuve 5.

Les moyens de chauffe 10 comportent des connecteurs coopérant avec des douilles d'alimentation électrique 11 agencées dans le socle 7. Le socle 7 comporte des moyens de sécurité thermique comportant un palpeur 12 et des moyens de régulation comportant un autre palpeur 13, ainsi que des moyens de commande 14 prévus pour piloter l'appareil.

Le couvercle 3 peut reposer sur la cuve 5, tel que représenté sur la figure 3. Dans cette configuration prévue notamment pour la réalisation de confitures, l'outil de travail rotatif 4 est agencé dans la cuve 5. Plus particulièrement, l'outil de travail rotatif 4 coiffe la cheminée 53, tel que montré sur la figure 3.

L'outil de travail rotatif 4 comporte un organe d'entraînement 40, un organe de travail 41, un autre organe de travail 42, et un moyeu 43. L'organe de travail 41 et l'autre organe de travail 42 sont issus du moyeu 43. Le moyeu 43 porte l'organe d'entraînement 40. Le moyeu 43 est tubulaire et présente deux échancrures inférieures 44, 45 opposées. Le moyeu 43 présente deux découpes latérales 46 permettant d'éviter le soulèvement de l'outil de travail rotatif 4 par les aliments, notamment par les aliments liquides. L'organe d'entraînement 40 présente un axe de rotation 47.

Le récipient intermédiaire 2 est prévu pour reposer sur la cuve 5. Le récipient intermédiaire 2 est prévu pour être interposé entre le couvercle 3 et la cuve 5. Le récipient intermédiaire 2 comporte une protubérance 20 prévue pour coiffer la cheminée 53 de la cuve 5.

Le récipient intermédiaire 2 forme une passoire. A cet effet, le récipient intermédiaire 2 comporte des ouvertures inférieures 22. Le récipient intermédiaire comporte également des ouvertures latérales extérieures 23. Le récipient intermédiaire comporte aussi des ouvertures latérales intérieures 24 ménagées sur une paroi latérale de la protubérance 20.

Le récipient intermédiaire 2 comporte une couronne supérieure 25 dépourvue de perforations. Des organes de préhension 26 sont issus de la couronne supérieure 25. La couronne supérieure 25 forme un décrochement 27 par rapport à la paroi extérieure présentant les ouvertures latérales extérieures 23. Le décrochement 27 est prévu pour reposer sur la cuve 5. A cet effet la cuve 5 présente un bord supérieur 55 recourbé. La couronne supérieure 25 du récipient intermédiaire 2 comporte un bord supérieur 28. Le diamètre du bord supérieur 28 du récipient intermédiaire 2 est supérieur au diamètre du bord supérieur 55 de la cuve 5.

Le couvercle 3 forme un couvercle à dégagement de vapeur contrôlé. Le couvercle 3 comporte un corps principal 30. Le corps principal 30 présente une ouverture 31, mieux visible sur la figure 3. Le couvercle 3 comporte un corps secondaire 32 mobile entre une position abaissée, illustrée à la figure 1, dans laquelle le corps secondaire 32 obture l'ouverture 31, et une position relevée, illustrée sur la figure 3, dans laquelle le corps secondaire 32 est écarté de l'ouverture 31.

Le couvercle 3 comporte des moyens d'appui périphériques 38 agencés sous le corps principal 30. Les moyens d'appui périphériques 38 sont annulaires. Les moyens d'appui périphériques 38 sont prévus pour reposer sur le récipient intermédiaire 2. Plus particulièrement alors, les moyens d'appui périphériques 38 reposent sur le bord supérieur 28 du récipient intermédiaire 2.

Le couvercle 3 comporte des moyens d'appui inférieurs 39 agencés sous le corps principal 30, les moyens d'appui inférieurs 39 ménageant un passage latéral 9 sous le corps principal 30 du couvercle 3. Les moyens d'appui périphériques 38 sont agencés sous le corps principal 30 à l'extérieur des moyens d'appui inférieurs 39. Plus particulièrement, les moyens d'appui inférieurs 39 sont formés par des languettes 17 présentant une zone d'appui 18. La zone d'appui 18 est prévue pour reposer sur le bord supérieur 55 de la cuve, tel que visible sur la figure 3. Le passage latéral 9 est annulaire. Le couvercle 3 repose sur la cuve 5 par l'intermédiaire des languettes 17 issues du corps principal 30.

Tel que visible sur la figure 3, les moyens d'appui inférieurs 39 reposant sur la cuve 5 ménagent le passage latéral 9 entre la cuve 5 et le corps principal 30 du couvercle 3. Le corps secondaire 32 occupe la position relevée lorsque le couvercle 3 repose sur la cuve 5.

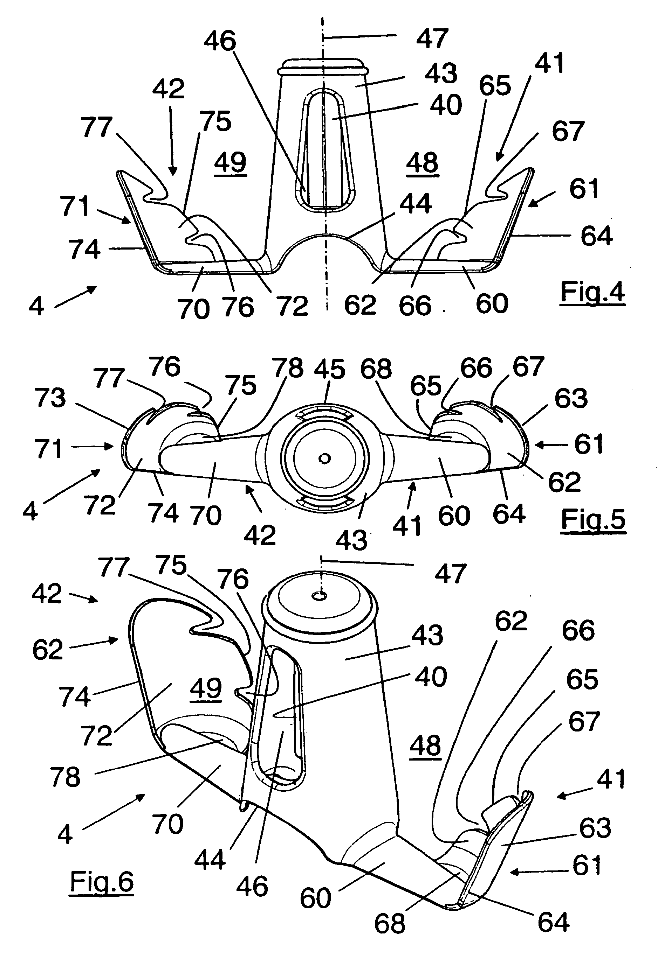

Les figures 4 à 6 illustrent l'outil de travail rotatif 4 selon l'invention appartenant à l'appareil électroménager de préparation culinaire illustré aux figures 1 à 3.

L'organe de travail 41 comporte un montant latéral 61. L'autre organe de travail 42 comporte un autre montant latéral 71. Le montant latéral 61 et l'autre montant latéral 71 présentent chacun une face intérieure 62, 72 et une face extérieure 63, 73. Les faces intérieures 62, 72 sont concaves. Les faces extérieures 63, 73 sont arrondies. Les faces intérieures 62, 72 ménagent un passage intérieur transversal 48, 49. Les faces intérieures 62, 72 et les faces extérieures 63, 73 s'étendent entre un bord latéral extérieur 64, 74 et un bord latéral intérieur 65, 75. Tel que bien visible sur la figure 5, la face intérieure 62, 72 est concave entre le bord latéral extérieur 64, 74 et le bord latéral intérieur 65,75.

La largeur du passage intérieur transversal 48, 49 au niveau du bord latéral intérieur 65, 75 est inférieure à 0,75 fois la largeur du passage intérieur transversal 48, 49 au niveau du bord latéral extérieur 64, 74. Tel qu'illustré sur les figures 4 à 6, la largeur du passage intérieur transversal 48, 49 au niveau de la partie inférieure du bord latéral intérieur 65, 75 est environ égale à la moitié de la largeur du passage intérieur transversal 48, 49 au niveau de la partie inférieure du bord latéral extérieur 64, 74.

Plus particulièrement, chacune des faces extérieures 63, 73 est recourbée vers l'intérieur de l'outil de travail rotatif 4. Chacun des bords latéraux intérieurs est retourné vers l'intérieur de l'outil de travail rotatif 4.

Les bords latéraux intérieurs 65, 75 présentent chacun une encoche 66, 76. Les bords latéraux intérieurs 65, 75 présentent chacun une autre encoche 67, 77 disposée au dessus de l'encoche 66, 76. Les bords latéraux extérieurs 64, 74 sont disposés sur un même coté de l'outil de travail rotatif 4. Les bords latéraux intérieurs 65, 75 sont disposés sur un même autre côté de l'outil de travail rotatif 4. L'organe de travail 41 et l'autre organe de travail 42 présentent une symétrie miroir.

L'outil de travail rotatif 4 comporte un bras inférieur 60 et un autre bras inférieur 70. Le bras inférieur 60 et l'autre bras inférieur 70 sont issus du moyeu 43. Le bras inférieur 60 est prolongé par le montant latéral 61. L'autre bras inférieur 70 est prolongé par l'autre montant latéral 71. Ainsi le bras inférieur 60 appartient à l'organe de travail 41. L'autre bras inférieur 70 appartient à l'autre organe de travail 42.

L'organe d'entraînement 40 est disposé entre le bras inférieur 60 et l'autre bras inférieur 70. Le bras inférieur 60 et l'autre bras inférieur 70 présentent une section transversale ayant un profil supérieur bombé. Les échancrures inférieures 44, 45 opposées du moyeu 43 sont agencées chacune entre le bras inférieur 60 et l'autre bras inférieur 70.

L'outil de travail rotatif 4 peut être entraîné par le dispositif d'entraînement 6 selon l'un ou l'autre des sens de rotation. Chacune des faces intérieures concaves 62, 72 peut former une zone de rétention d'aliments 68, 78 pour l'un des sens de rotation de l'outil de travail rotatif 4.

L'invention concerne également l'appareil électroménager de préparation culinaire comprenant la cuve 5 et l'outil de travail rotatif 4 comportant au moins un organe de travail 41, 42 présentant un bras inférieur 60, 70 s'étendant au dessus du fond 50 de la cuve 5.

Le montant latéral 61 appartenant à l'organe de travail 41 ménage un passage avec la paroi latérale 51 de la cuve 5 lorsque l'outil de travail rotatif 4 est agencé dans la cuve 5.

L'autre montant latéral 71 appartenant à l'autre organe de travail 42 ménage également un passage avec la paroi latérale 51 de la cuve 5 lorsque l'outil de travail rotatif 4 est agencé dans la cuve 5.

Avantageusement, l'appareil électroménager de préparation culinaire comprend également le récipient intermédiaire 2.

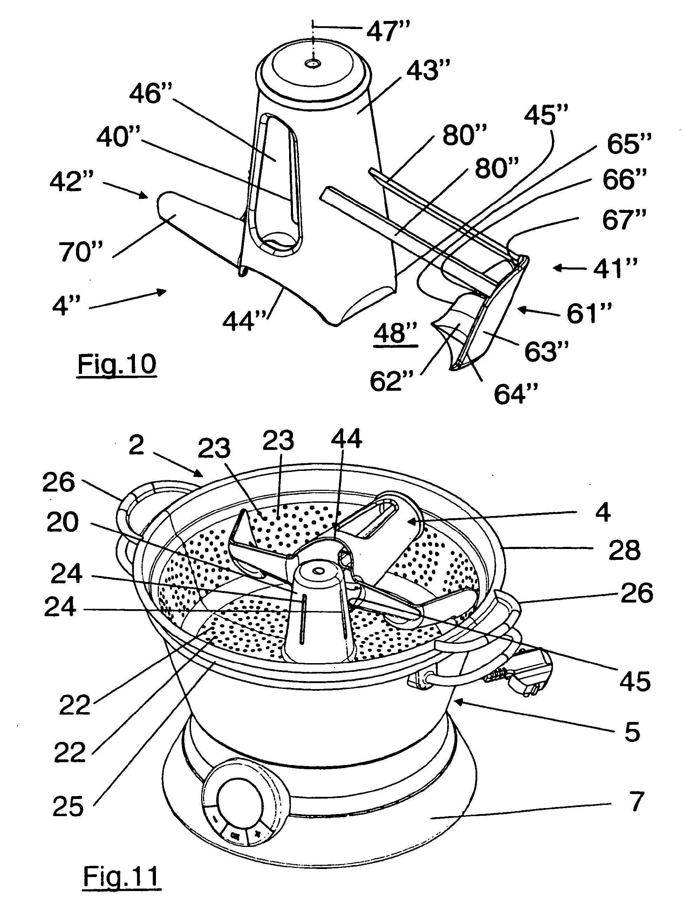

L'outil de travail rotatif 4 peut être rangé dans le récipient intermédiaire 2, tel que représenté à la figure 11. Les échancrures inférieures 44, 45 de l'outil de travail rotatif 4 coopèrent avec la protubérance 20 lorsque l'outil de travail rotatif 4 est disposé dans le récipient intermédiaire 2. Ainsi l'outil de travail rotatif 4 peut être logé dans le récipient intermédiaire 2, le couvercle 3 pouvant être ensuite disposé sur le récipient intermédiaire 2.

L'outil de travail rotatif 4 et l'appareil électroménager de préparation culinaire illustrés aux figures 1 à 6 s'utilisent et fonctionnent de la manière suivante.

Lorsque l'outil de travail rotatif 4 tourne dans la cuve 5 selon le sens de rotation indiqué sur la figure 2, la face intérieure 62 du montant latéral 61 forme une face d'attaque de l'organe de travail de 41. L'organe de travail 41 tend à ramener les aliments contenus dans la cuve 5 vers le centre de la cuve 5. La face extérieure 73 de l'autre montant latéral 71 forme une face d'attaque de l'autre organe de travail 42. L'autre organe de travail 42 tend à écraser les aliments contre la paroi latérale 51 de la cuve 5. Lorsque l'outil de travail rotatif 4 tourne dans l'autre sens de rotation, les effets de l'organe de travail 41 et de l'autre organe de travail 42 sont inversés.

Le montant latéral 61 ménage un passage avec la paroi latérale 51 de la cuve 5. L'autre montant latéral 71 ménage aussi un passage avec la paroi latérale 51 de la cuve 5.

Tel qu'illustré sur la figure 11, l'appareil peut présenter une configuration de rangement particulièrement compacte. Les échancrures inférieures 44, 45 de l'outil de travail rotatif 4 coopèrent avec la protubérance du récipient intermédiaire 2 lorsque l'outil de travail rotatif 4 est disposé dans le récipient intermédiaire 2.

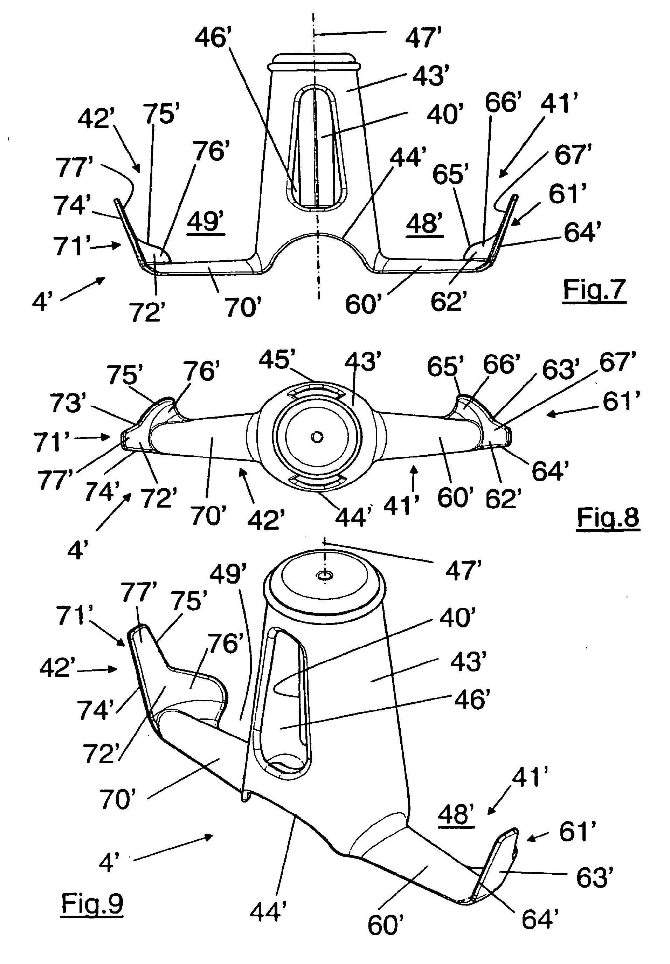

Une variante de réalisation d'un outil de travail rotatif 4' selon l'invention est illustrée aux figures 7 à 9.

L'outil de travail rotatif 4' peut être agencé dans la cuve 5 en remplacement de l'outil de travail rotatif 4.

L'outil de travail rotatif 4' présente un moyeu 43' identique au moyeu 43, ainsi qu'un organe de travail 41' et un autre organe de travail 42'. Le moyeu 43' présente deux encoches 46' et un organe d'entraînement 40'. Le montant latéral 61' et l'autre montant latéral 71' présentent une face intérieure 62', 72' concave ménageant un passage intérieur transversal 48', 49', et une face extérieure 63', 73'. La face intérieure 62', 72' et la face extérieure 63', 73' s'étendent entre un bord latéral extérieur 64', 74' et un bord latéral intérieur 65', 75'. Tel que bien visible sur la figure 8, la face intérieure 62', 72' est concave entre le bord latéral extérieur 64', 74' et le bord latéral intérieur 65', 75'.

La distance du bord latéral extérieur 64', 74' à l'axe de rotation 47' est supérieure à la distance du bord latéral intérieur 65', 75' à l'axe de rotation 47'. La largeur du passage intérieur transversal 48', 49' au niveau du bord latéral intérieur 65', 75' est plus importante que dans l'exemple de réalisation précédent mais reste inférieure à 0,75 fois la largeur du passage intérieur transversal 48', 49' au niveau du bord latéral extérieur 64', 74'.

L'organe d'entraînement 40' est disposé entre le bras inférieur 60' et l'autre bras inférieur 70'. Les bords latéraux extérieurs 64', 74' sont disposés sur un même coté de l'outil de travail rotatif 4'. Les bords latéraux intérieurs 65', 75' sont disposés sur un même autre côté de l'outil de travail rotatif 4'. L'organe de travail 41' et l'autre organe de travail 42' présentent une symétrie miroir.

L'organe de travail 41' et l'autre organe de travail 42' diffèrent de l'organe de travail 41 et de l'autre organe de travail 42 en ce que les bords latéraux intérieurs 65', 75' sont dépourvus d'encoches. Le montant latéral 61' présente une partie inférieure 66' s'étendant partiellement le long du bras inférieur 60' et une partie supérieure 67' s'étendant sensiblement transversalement par rapport au bras inférieur 60'. L'autre montant latéral 71' présente une partie inférieure 76' s'étendant partiellement le long du de l'autre bras inférieur 70' et une partie supérieure 77' s'étendant sensiblement transversalement par rapport à l'autre bras inférieur 70'.

L'outil de travail rotatif 4' peut également être rangé dans le récipient intermédiaire 2 grâce aux échancrures inférieures 44', 45' opposées.

Une autre variante de réalisation d'un outil de travail rotatif 4" selon l'invention est illustrée à la figure 10.

L'outil de travail rotatif 4" peut être agencé dans la cuve 5 en remplacement de l'outil de travail rotatif 4 ou de l'outil de travail rotatif 4'.

L'outil de travail rotatif 4" présente un moyeu 43" identique au moyeu 43, ainsi qu'un organe de travail 41" et un autre organe de travail 42". Le moyeu 43" présente deux encoches 46" et un organe d'entraînement 40". L'organe de travail 41" présente un montant latéral 61" présentant une forme comparable à la forme du montant latéral 61.

Toutefois le montant latéral 61" est relié au moyeu 43" par deux bras 80" issus de la partie supérieure du montant latéral 61 ". L'outil de travail rotatif 4" ne présente pas de bras inférieur reliant le moyeu 43" au montant latéral 61 ".

Le montant latéral 61" présente une face intérieure 62" concave ménageant un passage intérieur transversal 48", et une face extérieure 63". La face intérieure 62" et la face extérieure 63" s'étendent entre un bord latéral extérieur 64" et un bord latéral intérieur 65". La distance du bord latéral extérieur 64" à l'axe de rotation 47" est supérieure à la distance du bord latéral intérieur 65" à l'axe de rotation 47". Le bord latéral intérieur 65" présente une encoche 66" et une autre encoche 67" disposée au dessus de l'encoche 66". Tel que bien visible sur la figure 10, la face intérieure 62" est concave entre le bord latéral extérieur 64" et le bord latéral intérieur 65".

L'autre organe de travail 42" présente un bras inférieur 70". Toutefois, l'autre organe de travail 42" est dépourvu de montant latéral. Le bras inférieur 70" présente une section transversale ayant un profil supérieur bombé.

L'outil de travail rotatif 4" peut également être rangé dans le récipient intermédiaire 2 grâce aux échancrures inférieures 44", 45".

A titre de variante, le moyeu 43 ; 43' ; 43" pourrait être amovible par rapport à l'organe de travail 41 ; 41' ; 41 ", et/ou l'autre organe de travail 42 ; 42' ; 42".

A titre de variante, l'outil de travail rotatif 4 ; 4' ; 4" ne pourrait comporter qu'un seul organe de travail, ou plus de deux organes de travail.

A titre de variante, les moyens de chauffe 10 pourraient être solidaires du socle 7, la cuve 5 étant associée au moyens de chauffe 10 lorsque ladite cuve repose sur le socle 7.

A titre de variante, le socle 7 pourrait être solidaire de la cuve 5.

A titre de variante, l'appareil électroménager de préparation culinaire pourrait être dépourvu de moyens de chauffe 10.

La présente invention n'est nullement limitée aux exemples de réalisation décrits et à leurs variantes, mais englobe de nombreuses modifications dans le cadre des revendications.

## Revendications

1. Outil de travail rotatif (4 ; 4' ; 4") pour appareil électroménager de préparation culinaire, comportant un organe d'entraînement (40 ; 40' ; 40") présentant un axe de rotation (47 ; 47' ; 47"), et un organe de travail (41 ; 41' ; 41 "), l'organe de travail (41 ; 41' ; 41 ") comportant un montant latéral (61 ; 61' ; 61") présentant une face intérieure (62 ; 62' ; 62") concave ménageant un passage intérieur transversal (48 ; 48' ; 48"), et une face extérieure (63 ; 63' ; 63"), la face intérieure (62 ; 62' ; 62") et la face extérieure (63 ; 63' ; 63") s'étendant entre un bord latéral extérieur (64 ; 64' ; 64") et un bord latéral intérieur (65 ; 65' ; 65"), la distance du bord latéral extérieur (64 ; 64' ; 64") à l'axe de rotation (47 ; 47' ; 47") étant supérieure à la distance du bord latéral intérieur (65 ; 65' ; 65") à l'axe de rotation (47 ; 47' ; 47"), **caractérisé en ce que** la face intérieure (62 ; 62' ; 62") est concave entre le bord latéral extérieur (64 ; 64' ; 64") et le bord latéral intérieur (65 ; 65' ; 65").

2. Outil de travail rotatif (4 ; 4' ; 4") selon la revendication 1, **caractérisé en ce que** le bord latéral intérieur (65 ; 65' ; 65") est retourné vers l'intérieur de l'outil de travail rotatif (4 ; 4' ; 4").

3. Outil de travail rotatif (4 ; 4' ; 4") selon l'une des revendications 1 ou 2, **caractérisé en ce que** la largeur du passage intérieur transversal (48 ; 48' ; 48") au niveau du bord latéral intérieur (65 ; 65' ; 65") est inférieure à 0,75 fois la largeur du passage intérieur transversal (48 ; 48' ; 48") au niveau du bord latéral extérieur (64 ; 64' ; 64").

4. Outil de travail rotatif (4 ; 4") selon l'une des revendications 1 à 3, **caractérisé en ce que** le bord latéral intérieur (65 ; 65") présente une encoche (66 ; 66").

5. Outil de travail rotatif (4 ; 4' ; 4") selon l'une des revendications 1 à 4, **caractérisé en qu'**il comporte un bras inférieur (60 ; 60' ; 70").

6. Outil de travail rotatif (4 ; 4' ; 4") selon la revendication 5, **caractérisé en ce que** le bras inférieur (60 ; 60' ; 70") présente une section transversale ayant un profil supérieur bombé.

7. Outil de travail rotatif (4 ; 4') selon l'une des revendications 5 ou 6, **caractérisé en ce que** le bras inférieur (60 ; 60') est prolongé par le montant latéral (61 ; 61').

8. Outil de travail rotatif (4 ; 4') selon l'une des revendications 5 à 7, **caractérisé en ce qu'**il comporte un autre bras inférieur (70 ; 70').

9. Outil de travail rotatif (4 ; 4') selon la revendication 8, **caractérisé en ce que** l'organe d'entraînement (40 ; 40') est disposé entre le bras inférieur (60 ; 60') et l'autre bras inférieur (70 ; 70').

10. Outil de travail rotatif (4 ; 4' ; 4") selon l'une des revendications 1 à 9, **caractérisé en ce qu'**il comporte un moyeu (43 ; 43' ; 43") tubulaire présentant deux échancrures inférieures (44, 45 ; 44', 45' ; 44", 45") opposées.

11. Outil de travail rotatif (4; 4') selon l'une des revendications 1 à 10, **caractérisé en ce qu'**il comporte un autre organe de travail (42 ; 42') comportant un autre montant latéral (71 ; 71') présentant une face intérieure (72 ; 72') concave ménageant un passage intérieur transversal (49 ; 49'), et une face extérieure (73 ; 73'), la face intérieure (72 ; 72') et la face extérieure (73 ; 73') s'étendant entre un bord latéral extérieur (74 ; 74') et un bord latéral intérieur (75 ; 75'), la distance du bord latéral extérieur (74 ; 74') à l'axe de rotation (47 ; 47') étant supérieure à la distance du bord latéral intérieur (75 ; 75') à l'axe de rotation (47 ; 47'), la face intérieure (72 ; 72') étant concave entre le bord latéral extérieur (74 ; 74') et le bord latéral intérieur (75 ; 75').

12. Outil de travail rotatif (4 ; 4') selon la revendication 11, **caractérisé en ce que** les bords latéraux extérieurs (64, 74 ; 64', 74') sont disposés sur un même côté de l'outil de travail rotatif (4 ; 4') et **en ce que** les bords latéraux intérieurs (65, 75 ; 65', 75') sont disposés sur un même autre côté de l'outil de travail rotatif (4 ; 4').

13. Outil de travail rotatif (4 ; 4'), selon l'une des revendications 11 ou 12, **caractérisé en ce que** l'organe de travail (41 ; 41') et l'autre organe de travail (42 ; 42') présentent une symétrie miroir.

14. Outil de travail rotatif (4 ; 4') selon l'une des revendications 8 à 10 et l'une des revendications 11 à 13, **caractérisé en ce que** l'autre bras inférieur (70 ; 70') est prolongé par l'autre montant latéral (71 ; 71').

15. Appareil électroménager de préparation culinaire comprenant une cuve (5) présentant un fond (50) et une paroi latérale (51), un outil de travail rotatif (4 ; 4' ; 4") étant agencé dans ladite cuve (5), **caractérisé en ce que** l'outil de travail rotatif (4, 4' ; 4") est conforme à l'une des revendications 1 à 14 et **en ce que** le bord latéral extérieur (64 ; 64' ; 64") s'élève le long de la paroi latérale (51).

16. Appareil électroménager de préparation culinaire selon la revendication 15, **caractérisé en ce qu'**il comprend un récipient intermédiaire (2) prévu pour reposer sur la cuve (5), le récipient intermédiaire (2) comportant une protubérance (20) prévue pour coiffer une cheminée (53) issue du fond (50) de la cuve (5) lorsque l'outil de travail rotatif (4 ; 4' ; 4") est retiré, l'outil de travail rotatif (4 ; 4') étant conforme à la revendication 10, les échancrures inférieures (44, 45 ; 44', 45' ; 44", 45") coopérant avec la protubérance (20) lorsque l'outil de travail rotatif (4 ; 4' ; 4") est disposé dans le récipient intermédiaire (2).

17. Appareil électroménager de préparation culinaire selon la revendication 16, **caractérisé en ce que** le récipient intermédiaire (2) forme une passoire.

18. Appareil électroménager de préparation culinaire selon l'une des revendications 15 à 17, **caractérisé en ce que** le montant latéral (61 ; 61' ; 61 ") ménage un passage avec la paroi latérale (51) de la cuve (5).

19. Appareil électroménager de préparation culinaire selon l'une des revendications 15 à 18, **caractérisé en ce que** l'outil de travail rotatif (4 ; 4') est conforme à l'une des revendications 11 à 14 et **en ce que** l'autre montant latéral (71 ; 71') ménage un passage avec la paroi latérale (51) de la cuve (5).

20. Appareil électroménager de préparation culinaire selon l'une des revendications 15 à 19, **caractérisé en ce que** la cuve (5) est associée à des moyens de chauffe (10).

## Claims

1. Rotary working tool (4; 4'; 4") for electrical household food preparation appliance, comprising a drive element (40; 40'; 40") with a rotating shaft (47; 47'; 47"), and a working element (41; 41'; 41 "), the working element (41; 41'; 41 ") comprising a side post (61; 61'; 61") with a concave inner face (62; 62'; 62") providing a transversal internal passage (48; 48'; 48"), and an outer face (63; 63'; 63"), the inner face (62; 62'; 62") and the outer face (63; 63'; 63") extending between an outer side edge (64; 64'; 64") and an inner side edge (65; 65'; 65"), the distance from the outer side edge (64; 64'; 64") to the rotating shaft (47; 47'; 47") being greater than the distance from the inner side edge (65; 65'; 65") to the rotating shaft (47; 47'; 47"), **characterised in that** the inner face (62; 62'; 62") is concave between the outer side edge (64; 64'; 64") and the inner side edge (65; 65'; 65").

2. Rotary working tool (4; 4'; 4") according to claim 1, **characterised in that** the inner side edge (65; 65'; 65") is turned inward from the rotary working tool (4; 4'; 4").

3. Rotary working tool (4; 4'; 4") according to one of claims 1 or 2, **characterised in that** the width of the transversal internal passage (48; 48'; 48") at the inner side edge (65; 65'; 65") is less than 0.75 times the width of the transversal internal passage (48; 48'; 48") at the outer side edge (64; 64'; 64").

4. Rotary working tool (4; 4") according to one of claims 1 to 3, **characterised in that** the inner side edge (65; 65") has a notch (66; 66").

5. Rotary working tool (4; 4'; 4") according to one of claims 1 to 4, **characterised in that** it comprises a lower arm (60; 60'; 70").

6. Rotary working tool (4; 4'; 4") according to claim 5, **characterised in that** the lower arm (60; 60'; 70") has a cross-section with a rounded upper profile.

7. Rotary working tool (4; 4') according to one of claims 5 or 6, **characterised in that** the lower arm (60; 60') is extended by the side post (61; 61').

8. Rotary working tool (4; 4') according to one of claims 5 to 7, **characterised in that** it comprises another lower arm (70; 70').

9. Rotary working tool (4; 4') according to claim 8, **characterised in that** the drive element (40; 40') is arranged between the lower arm (60; 60') and the other lower arm (70; 70').

10. Rotary working tool (4; 4'; 4") according to one of claims 1 to 9, **characterised in that** it comprises a tubular hub (43; 43'; 43") with two opposite lower recesses (44, 45; 44', 45'; 44", 45").

11. Rotary working tool (4; 4') according to one of claims 1 to 10, **characterised in that** it comprises a working element (42; 42') comprising another side post (71; 71') with a concave inner face (72; 72') providing a transversal internal passage (49; 49'), and an outer face (73; 73'), the inner face (72; 72') and the outer face (73; 73') extending between an outer side edge (74; 74') and an inner side edge (75; 75'), the distance from the outer side edge (74; 74') to the rotating shaft (47; 47') being greater than the distance from the inner side edge (75; 75') to the rotating shaft (47; 47'), the inner face (72; 72') being concave between the outer side edge (74; 74') and the inner side edge (75; 75').

12. Rotary working tool (4; 4') according to claim 11, **characterised in that** the outer side edges (64, 74; 64', 74') are arranged on the same side of the rotary working tool (4; 4') and **in that** the inner side edges (65, 75; 65', 75') are arranged on the same other side of the rotary working tool (4; 4').

13. Rotary working tool (4; 4') according to one of claims 11 or 12, **characterised in that** the working element (41; 41') and the other working element (42; 42') have a mirror symmetry.

14. Rotary working tool (4; 4') according to one of claims 8 to 10 and one of claims 11 to 13, **characterised in that** the other lower arm (70; 70') is extended by the other side post (71; 71').

15. Electrical household food preparation appliance comprising a bowl (5) with a bottom (50) and a side wall (51), a rotary working tool (4; 4'; 4") being arranged inside said bowl (5), **characterised in that** the rotary working tool (4, 4'; 4") conforms to one of claims 1 to 14 and **in that** the outer side edge (64; 64'; 64") rises along the side wall (51).

16. Electrical household food preparation appliance according to claim 15, **characterised in that** it comprises an intermediate container (2) intended to rest on the bowl (5), the intermediate container (2) comprising a protuberance (20) intended to cover a shaft (53) rising from the bottom (50) of the bowl (5) when the rotary working tool (4; 4'; 4") is withdrawn, the rotary working tool (4; 4') conforming to claim 10, the lower recesses (44, 45; 44', 45'; 44", 45") cooperating with the protuberance (20) when the rotary working tool (4; 4'; 4") is arranged inside the intermediate container (2).

17. Electrical household food preparation appliance according to claim 16, **characterised in that** the intermediate container (2) forms a strainer.

18. Electrical household food preparation appliance according to one of claims 15 to 17, **characterised in that** the side post (61; 61 ; 61 ") provides a passage with the side wall (51) of the bowl (5).

19. Electrical household food preparation appliance according to one of claims 15 to 18, **characterised in that** the rotary working tool (4; 4') conforms to one of claims 11 to 14 and **in that** the other side post (71; 71') provides a passage with the side wall (51) of the bowl (5).

20. Electrical household food preparation appliance according to one of claims 15 to 19, **characterised in that** the bowl (5) is associated with heating means (10).

## Patentansprüche

1. Drehendes Arbeitswerkzeug (4 ; 4' ; 4") für ein Elektrohaushaltsgerät für kulinarische Zubereitungen, umfassend ein Antriebsorgan (40 ; 40' ; 40"), das eine Drehachse (47 ; 47' ; 47") aufweist, und ein Arbeitsorgan (41 ; 41' ; 41"), wobei das Arbeitsorgan (41 ; 41' ; 41") einen seitlichen Schenkel (61 ; 61' ; 61") umfasst, der eine konkave Innenseite (62; 62'; 62"), die eine quer verlaufende Innenpassage (48 ; 48' ; 48") ausbildet, und eine Außenseite (63 ; 63' ; 63") aufweist, wobei sich die Innenseite (62 ; 62' ; 62") und die Außenseite (63 ; 63' ; 63") zwischen einem äußeren Seitenrand (64 ; 64' ; 64") und einem inneren Seitenrand (65 ; 65' ; 65") erstrecken, wobei der Abstand vom äußeren Seitenrand (64 ; 64' ; 64") zur Drehachse (47 ; 47' ; 47") größer ist als der Abstand vom inneren Seitenrand (65 ; 65' ; 65") zur Drehachse (47 ; 47' ; 47"), **dadurch gekennzeichnet, dass** die Innenseite (62 ; 62' ; 62") zwischen dem äußeren Seitenrand (64 ; 64' ; 64") und dem inneren Seitenrand (65 ; 65' ; 65") konkav ist.

2. Drehendes Arbeitswerkzeug (4 ; 4' ; 4") nach Anspruch 1, **dadurch gekennzeichnet, dass** der innere Seitenrand (65 ; 65' ; 65") Richtung Inneres des drehenden Arbeitswerkzeugs (4 ; 4' ; 4") gebogen ist.

3. Drehendes Arbeitswerkzeug (4 ; 4' ; 4") nach einem der Ansprüche 1 oder 2, **dadurch gekennzeichnet, dass** die Breite der quer verlaufenden Innenpassage (48 ; 48' ; 48") auf Höhe des inneren Seitenrands (65 ; 65' ; 65") kleiner ist als 0,75 Mal die Breite der quer verlaufenden Innenpassage (48 ; 48' ; 48") auf Höhe des äußeren Seitenrands (64 ; 64' ; 64").

4. Drehendes Arbeitswerkzeug (4 ; 4") nach einem der Ansprüche 1 bis 3, **dadurch gekennzeichnet, dass** der innere Seitenrand (65 ; 65") eine Auskerbung (66 ; 66") aufweist.

5. Drehendes Arbeitswerkzeug (4 ; 4' ; 4") nach einem der Ansprüche 1 bis 4, **dadurch gekennzeichnet, dass** es einen unteren Arm (60 ; 60' ; 70") umfasst.

6. Drehendes Arbeitswerkzeug (4 ; 4' ; 4") nach Anspruch 5, **dadurch gekennzeichnet, dass** der untere Arm (60 ; 60' ; 70") einen Querschnitt mit einem gewölbten, oberen Profil aufweist.

7. Drehendes Arbeitswerkzeug (4 ; 4') nach einem der Ansprüche 5 oder 6, **dadurch gekennzeichnet, dass** der untere Arm (60 ; 60') von einem seitlichen Schenkel (61 ; 61') verlängert wird.

8. Drehendes Arbeitswerkzeug (4 ; 4') nach einem der Ansprüche 5 bis 7, **dadurch gekennzeichnet, dass** es einen weiteren unteren Arm (70 ; 70') umfasst.

9. Drehendes Arbeitswerkzeug (4 ; 4') nach Anspruch 8, **dadurch gekennzeichnet, dass** das Antriebsorgan (40 ; 40') zwischen dem unteren Arm (60 ; 60') und dem anderen unteren Arm (70 ; 70') angeordnet ist.

10. Drehendes Arbeitswerkzeug (4 ; 4' ; 4") nach einem der Ansprüche 1 bis 9, **dadurch gekennzeichnet, dass** es eine röhrenförmige Nabe (43 ; 43' ; 43") umfasst, die zwei gegenüberliegende, untere Ausschnitte (44, 45 ; 44', 45' ; 44", 45") aufweist.

11. Drehendes Arbeitswerkzeug (4; 4') nach einem der Ansprüche 1 bis 10, **dadurch gekennzeichnet, dass** es ein weiteres Arbeitsorgan (42 ; 42') umfasst, das einen weiteren seitlichen Schenkel (71 ; 71') umfasst, der eine konkave Innenseite (72 ; 72'), die eine quer verlaufende Innenpassage (49 ; 49') ausbildet, und eine Außenseite (73 ; 73') aufweist, wobei sich die Innenseite (72 ; 72') und die Außenseite (73 ; 73') zwischen einem äußeren Seitenrand (74 ; 74') und einem inneren Seitenrand (75 ; 75') erstrecken, wobei der Abstand vom äußeren Seitenrand (74 ; 74') zur Drehachse (47 ; 47') größer ist als der Abstand vom inneren Seitenrand (75 ; 75') zur Drehachse (47 ; 47'), wobei die Innenseite (72 ; 72') zwischen dem äußeren Seitenrand (74 ; 74') und dem inneren Seitenrand (75 ; 75') konkav ist.

12. Drehendes Arbeitswerkzeug (4 ; 4') nach Anspruch 11, **dadurch gekennzeichnet, dass** die äußeren Seitenränder (64, 74 ; 64', 74') auf einer gleichen Seite des drehenden Arbeitswerkzeugs (4 ; 4') angeordnet sind, und dadurch, dass die inneren Seitenränder (65, 75 ; 65', 75') auf einer gleichen anderen Seite des drehenden Arbeitswerkzeugs (4 ; 4') angeordnet sind.

13. Drehendes Arbeitswerkzeug (4; 4') nach einem der Ansprüche 11 oder 12, **dadurch gekennzeichnet, dass** das Arbeitsorgan (41 ; 41') und das andere Arbeitsorgan (42 ; 42') eine Spiegelsymmetrie aufweisen.

14. Drehendes Arbeitswerkzeug (4 ; 4') nach einem der Ansprüche 8 bis 10 und einem der Ansprüche 11 bis 13, **dadurch gekennzeichnet, dass** der andere untere Arm (70 ; 70') vom anderen seitlichen Schenkel (71 ; 71') verlängert wird.

15. Elektrohaushaltsgerät für kulinarische Zubereitungen, umfassend einen Behälter (5), der einen Boden (50) und eine Seitenwand (51) aufweist, wobei ein drehendes Arbeitswerkzeug (4 ; 4' ; 4") im Behälter (5) angeordnet ist, **dadurch gekennzeichnet, dass** das drehende Arbeitswerkzeug (4, 4' ; 4") einem der Ansprüche 1 bis 14 entspricht, und dadurch, dass sich der äußere Seitenrand (64 ; 64' ; 64") entlang der Seitenwand (51) erhebt.

16. Elektrohaushaltsgerät für kulinarische Zubereitungen nach Anspruch 15, **dadurch gekennzeichnet, dass** es einen Zwischenbehälter (2) umfasst, der dafür vorgesehen ist, auf dem Behälter (5) aufzuliegen, wobei der Zwischenbehälter (2) eine Ausstülpung (20) umfasst, die zum Abdecken eines Schachts (53) vorgesehen ist, der aus dem Boden (50) des Behälters (5) hervorgeht, wenn das drehende Arbeitswerkzeug (4 ; 4' ; 4") abgenommen wird, wobei das drehende Arbeitswerkzeug (4 ; 4') dem Anspruch 10 entspricht, wobei die unteren Ausschnitte (44, 45 ; 44', 45' ; 44", 45") mit der Ausstülpung (20) zusammenwirken, wenn das drehende Arbeitswerkzeug (4 ; 4' ; 4") im Zwischenbehälter (2) angeordnet ist.

17. Elektrohaushaltsgerät für kulinarische Zubereitungen nach Anspruch 16, **dadurch gekennzeichnet, dass** der Zwischenbehälter (2) ein Sieb bildet.

18. Elektrohaushaltsgerät für kulinarische Zubereitungen nach einem der Ansprüche 15 bis 17, **dadurch gekennzeichnet, dass** der seitliche Schenkel (61 ; 61' ; 61") mit der Seitenwand (51) des Behälters (5) einen Durchtritt ausbildet.

19. Elektrohaushaltsgerät für kulinarische Zubereitungen nach einem der Ansprüche 15 bis 18, **dadurch gekennzeichnet, dass** das drehende Arbeitswerkzeug (4 ; 4') einem der Ansprüche 11 bis 14 entspricht, und dadurch, dass der andere seitliche Schenkel (71 ; 71') einen Durchtritt mit der Seitenwand (51) des Behälters (5) ausbildet.

20. Elektrohaushaltsgerät für kulinarische Zubereitungen nach einem der Ansprüche 15 bis 19, **dadurch gekennzeichnet, dass** der Behälter (5) mit Heizmitteln (10) verbunden ist.
